# EUROPEAN PATENT APPLICATION

(11) **EP 2 345 702 A1**
(43) Date of publication of application: **20.07.2011**
(21) Application number: 10000248.4
(22) Date of filing: 13.01.2010
(51) Int. Cl.: C09D 9/00

(54) **Paint and coating remover compositions**

(71) Applicant: Cognis IP Management GmbH, 40589 Düsseldorf (DE)
(72) Inventor: Valls, Ramon, 08022 Barcelona (ES); Bigorra Llosas, Joaquin, 08201 Sabadell (ES); Graupera, Elisabet, 08201 Sabadell (Barcelona) (ES); Raya, Javier, 08970 Sant Joan Despi (Barcelona) (ES)
(74) Representative: Fabry, Bernd

(57) **Abstract**

Suggested are paint and coating remover compositions, comprising
(a) a first solvent selected from the group consisting of carboxylic acid dialkylamides, and
(b) a second solvent selected from the group consisting of C₁-C₆ alcohols, C₂-C₁₀ polyols, C₂-C₆ ketones, NMP, DMF, mono or dicarboxylic acid esters, aromatic hydrocarbons, terpenes, nitromethane and their mixtures.

## Description

### Field of the invention

The present invention is related to the area of lacquers, paints and coatings and concerns new paint remover compositions comprising dialkylamides of carboxylic acids.

### Background of the invention

Paint stripper, or paint remover, is the generic name given to solvent mixtures designed to remove paint and other finishes and also to clean the underlying surface. The principal active ingredient is usually dichloromethane. Nevertheless, also formulations with orange oil (or other terpene solvents), N-methylpyrrolidone (NMP), esters such as dibasic esters (often dimethyl esters of shorter dicarboxylic acids, sometimes aminated, for example, adipic acid or glutamic acid), aromatic hydrocarbons, dimethyl formamide (DMF), and other solvents are known as well. The formula differs according to the type of paint and the character of the underlying surface. Nitromethane is another commonly used solvent; some formulations also include dimethyl sulfoxide (DMSO). Paint strippers come in a liquid or a gel ("thixotropic") form that clings even to vertical surfaces.

German patent application DE19747891A1(Henkel) discloses remover compositions, especially for graffiti, comprising dialkylamides based on fatty acids and triglycerides. These products, however, have been found to lack performance. US3,554,917 (Buckmann) proposes mixtures of oleic acid dimethylamide and methylene chloride also as paint removers. However, for toxicological reasons it is desirous to replace chlorinated hydrocarbons by solvents which are more environmental friendly.

The principle of paint strippers is penetration of the paint film by the molecules of the active ingredient, causing its swelling; this volume increase causes internal strains, which, together with the weakening of the layer's adhesion to the underlying surface, leads to separation of the layer of the paint from the substrate. As explained above, most of the effective working paint remover compositions one can find in the market are based on chlorinated hydrocarbons which are unwanted for ecological reasons, while those alternatives which are free of these compounds do not work well. The problem underlying the present invention has been to develop new paint removers, showing a high performance and are free of chlorinated compounds.

### Detailed description of the invention

The present invention refers to paint and coating remover compositions, comprising
(a) a first solvent selected from the group consisting of carboxylic acid dialkylamides, and
(b) a second solvent selected from the group consisting of C₁-C₆ alcohols, C₂-C₁₀ polyols, C₂-C₄ ketones, NMP, DMF, mono or dicarboxylic acid esters, aromatic hydrocarbons, terpenes, nitromethane and their mixtures.

Surprisingly it has been observed that dialkylamides based on carboxylic acids, more particular on fatty acids, hydroxycarboxylic acids and/or dicarboxylic acids in combination with various other non-chlorinated solvents exhibit an excellent performance in removing colours, paints, lacquers and coatings from various hard surfaces, while also showing an improved toxicological and ecological behaviour.

### The first solvent

The first solvent represents a dialkylamide derived from
(i) mono carboxylic acids, in particular from fatty acids,
(ii) dicarboxylic acids, in particular from adipic acid, or
(iii) hydroxy carboxylic acids, in particular from lactic acid.

### Dialkylamides based on monocarboxylic acids

Dialkylamides based on monocarboxylic acids, particularly fatty acids follow the general formula (I), 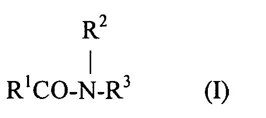 in which R¹CO stands for an aliphatic or aromatic acyl radical having 6 to 22 carbon atoms, preferably 8 to 12 carbon atoms and 0 or 1 to 3 double bonds, and R² and R³ independently from each other represent a C₁-C₄ alkyl or hydroxyalkyl radical. Typical examples are dialkylamides based on caproic acid, caprylic acid, 2-ethyl hexanoic acid, caprinic acid, lauric acid, myristic acid, palmitic acid, stearic acid, isostearic acid, oleic acid, (conjugated) linolic acid, linoleic acid, gadoleic acid, arachidonic acid, behenic acid, erucic acid, tall oil fatty acid, and their technical mixtures or benzoic acid. Examples for suitable alkyl groups are methyl, ethyl, propyl, i-propyl, n-butyl, i-butyl, and tert.-butyl. Overall preferred are dimethylamides, dibutylamides and di-2-ethylhexylamides.

### Dialkylamides based on dicarboxylic acids

In a second embodiment, said dialkylamides can be derived from dicarboxylic acids following general formula (II) 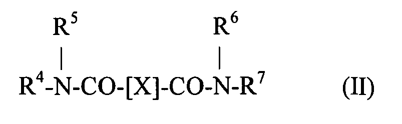 in which R⁴, R⁵, R⁶ and R⁷ independently from each other represent a C₁-C₄ alkyl or hydroxyalkyl radical and X stands for an alkylene group having 1 to 12 carbon atoms. Typical examples are the symmetrical or asymmetrical diamides based on maleic acid, fumaric acid or adipic acid. Examples for suitable alkyl groups are again methyl, ethyl, propyl, i-propyl, n-butyl, i-butyl, and tert.-butyl. In another preferred embodiment of the present invention, those dialkylamides are used which show similar alkyl groups, preferably methyl groups, since dimethylamides exhibit superior solvent properties. Therefore, the residues R⁴ to R⁷ in formulae (I) and (II) preferably represent methyl groups.

### Dialkylamides derived from hydroxy carboxylic acids

In the alternative, dialkylamides according to the present invention can be derived from hydroxy-substituted mono-, di- or tricarboxylic acid. In case the carboxylic acid has two or three acid groups, the amide may be a mono-, di- or triamide or represent a statistical mixture. In a first embodiment of the present invention, dialkylamides follow the general formula (III), 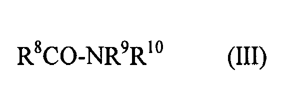 in which R⁸CO stands for a hydroxysubstituted acyl radical having 1 to 22 carbon atoms, and R⁹ and R¹⁰ independently represent hydrogen or represent a C₁-C₄ alkyl or hydroxyalkyl radical. Typical examples are dialkylamides of lactic acid, ricinoleic acid or 12-hydroxy stearic acid. Other suitable dialkylamides can be derived from citric acid or tartaric acid or their mixtures. The preferred dialkylamides represent dimethylamides. The most preferred species exhibiting the best performance is lactic acid dimethylamide.

The species showing the best solvent properties can be found in the group comprising the C₆-C₁₂ fatty acid dimethylamides, such as, for example, capric acid dimethylamide or caprylic fatty acid dimethylamide, and lactic acid dibutylamide which are especially preferred for the purpose of the present invention.

### The second solvent

The second solvent assists the first solvent penetrating into the paint and its removal and differs according to the target paint. These co-solvents are typically selected from the group consisting of C₁-C₆ alcohols, C₁-C₆ alcohols, C₂-C₁₀ polyols, C₂-C₄ ketones, NMP, DMF, mono or dicarboxylic acid esters, aromatic hydrocarbons, terpenes, nitromethane and their mixtures.

Typical examples for suitable lower alcohols are methanol, ethanol, propanol, isopropyl alcohol, butanol, pentanol, hexanol and its isomers. Examples for polyols encompass, ethyleneglycol, diethyleneglycol, propylenglycol, dipropyleneglycol, butyleneglycol, glycerol, trimethylolmethane, and pentaerythrol. Suitable ketones include acetone and methylethylketone. Esters may be derived from the same group of mono-, di- or hydroxycarboxylic acids than the amides forming group (a). Aromatic hydrocarbons include toluene and cumene. A typical terpene is limonene.

The first and the second solvent may be applied in ratios by weight of about 99:1 to about 40:60, preferably about 95:5 to about 50:50 and more preferably about 90:10 to about 75:25.

### Suitable auxiliary agents

The paint remover compositions according to the present invention may also include various auxiliary agents, as for example ― but not limited to:
o activators;
o surfactants;
o thickeners;
o corrosion inhibitors;
o sequesterant and chelating agents; and/or
o colorants.
which are described in more detail below.

*Activators* increase the penetration rate; for dichloromethane water is suitable, other choices are amines, strong acids or strong alkalines. The activator's role is to disrupt the molecular and intermolecular bonds in the paint film and assist with weakening it. Its composition depends on the character of the paint to be removed. Mineral acids are used for epoxy resins to hydrolyze their ether bonds. Alkaline activators are usually based on sodium hydroxide. Some cosolvents double as activators. Amine activators, alkalines weaker than inorganic hydroxides, are favored when the substrate could be corroded by strong acids or bases.

*Surfactants* assist with wetting the surface, increasing the area of where the solvent can penetrate the paint layer. Anionic surfactants (e.g., dodecyl benzene sulfonate or sodium xylene sulfonate) are used for acidic formulas, cationic or nonionic are suitable for alkaline formulas. Paint strippers containing surfactants are excellent brush cleaners.

*Thickeners* are used for thixotropic formulas to help the mixture form gel that adheres to vertical surfaces and to reduce the evaporation of the solvents, thus prolonging the time the solvent can penetrate the paint. Cellulose-based agents, e.g., hydroxypropyl cellulose, are commonly used for mixtures that are not extremely acidic or basic; under such conditions cellulose undergoes hydrolysis and loses effectivity, so fumed silica is used for these instead. Another possibility is using waxes (usually paraffin wax or polyethylene or polypropylene derivatives), or polyacrylates gels.

*Corrosion inhibitors* are added to the formula to protect the underlying substrate and the paint stripper storage vessel (usually a tin can) from corrosion. Dichloromethane decomposes with time to hydrochloric acid, which readily reacts with propylene oxide or butylene oxide and therefore is removed from the solution. Chromate-based inhibitors give the mixture a characteristic yellow color. Other possibilities include polyphosphates, silicates, borates and various antioxidants.

*Sequestrant and chelating agents* are used to 'disarm' metal ions present in the solution, which could otherwise reduce the efficiency of other components, and assist with cleaning stains, which often contain metal compounds. The most common sequestrants used in paint strippers are EDTA, tributyl phosphate, and sodium phosphate.

*Colorants* are added in order to make the substance look different from the competitors', and to make it easier to see which areas the remover has been applied to.

A typical paint remover composition comprises:
(a) about 40 to about 99, preferably about 50 to about 95, and more preferably about 75 to 90 % b.w. of a first solvent selected from the group consisting of carboxylic acid dialkylamides,
(b) about 1 to about 60, preferably about 5 to about 50, and more preferably about 10 to 25 % b.w. of a second solvent selected from the group consisting of C₂-C₄ alcohols, C₁-C₄ ketones, NMP, DMF, mono or dicarboxylic acid esters, aromatic hydrocarbons, terpenes, nitromethane and their mixtures, and
(c) 0 to about 15, preferably about 1 to about 10 % b.w. auxiliary agents,
on condition that the amounts add to 100 % b.w.

### Industrial application

The present invention is also directed to the use of mixtures comprising
(a) a first solvent selected from the group consisting of carboxylic acid dialkylamides, and
(b) a second solvent selected from the group consisting of C₂-C₄ alcohols, C₁-C₄ ketones, NMP, DMF, mono or dicarboxylic acid esters, aromatic hydrocarbons, terpenes, nitromethane and their mixtures
for the removal of lacquers, paints and coatings, especially graffiti, from various hard surfaces.

### Examples

### Examples 1 to 6, Comparative Example C 1

The performance of various paint remover compositions was determined according to the following procedure:
1. Paint iron panels (two hands)
2. Place panels at 30°C for better curing during 20 hours.
3. Apply the paint striper on each panel (one hand)
4. Write down at which time appears first cracking signals (t1)
5. Write down at which time the half of panel is craked (t½)
6. Write down at which time the total panel is cracker (tf)
7. Remove the paint under tap water by means of a abrasive brush
8. Evaluate final aspect and decide if a second paint stripper hand is needed.

The results are shown in the following Table 1 (average of three measurements). Examples 1 to 6 are according to the invention, example C1 has been conducted with a market product based on dichloromethane and deals for comparison.

**Table 1**

| Performance of paint removers | | | | | | | |
|---|---|---|---|---|---|---|---|
| Composition | 1 | 2 | 3 | 4 | 5 | 6 | C1 |
| C₈ fatty acid dimethylamide | 90 | - | - | - | - | - | - |
| C_{8/10} fatty acid dimethylamide | - | 90 | - | - | - | - | - |
| C₁₀ fatty acid dimethylamide | - | - | 90 | - | - | - | - |
| Adipic acid dimethylamide | - | - | - | 90 | - | - | - |
| Lactic aid dimethylamide | - | - | - | - | 90 | - | - |
| Lactic acid dibutylamide | - | - | - | - | - | 90 | - |
| Ethanol | 10 | 10 | - | - | - | - | - |
| Acetone | - | - | 10 | 10 | - | - | - |
| C_{8/10} fatty acid methylester | - | - | - | - | 10 | 10 | - |
| Market product | - | - | - | - | - | - | 100 |
| T₁ (min) | 0.5 | 0.5 | 0.5 | 0.5 | 1.0 | 1.0 | 0.5 |
| T½ (Min) | 1.0 | 1.0 | 1.0 | 1.0 | 2.0 | 2.0 | 1.0 |
| T_{final} (min) | 2.0 | 2.0 | 2.0 | 2.5 | 3.0 | 2.5 | 2.0 |
| Aspect | Wet paint residue | Wet paint residue | Wet paint residue | Wet paint residue | Wet paint residue | Wet paint residue | Dried paint residue |
| Removal resistance | Easy | Easy | Easy | Easy | Medium | Medium | Medium |
| Final aspect | Ok | Ok | Ok | Ok | Second stripper hand needed | Ok | Second stripper hand needed |

The examples clearly show that the new compositions exhibit a similar performance compared to a standard product of the market, while they provide the advantage of being free of chlorinated products. Compared to the market product, paint removal using the products according to the present invention is often easier and no second stripper hand is required.

## Claims

1. Paint and coating remover compositions, comprising
(a) a first solvent selected from the group consisting of carboxylic acid dialkylamides, and
(b) a second solvent selected from the group consisting of C₁-C₆ alcohols, C₂-C₁₀ polyols, C₂-C₆ ketones, NMP, DMF, mono or dicarboxylic acid esters, aromatic hydrocarbons, terpenes, nitromethane and their mixtures.

2. Compositions according to Claim 1, **characterised in that** compound (a) represents a dialkylamide derived from monocarboxylic acids, dicarboxylic acids, or hydroxy carboxylic acids.

3. Compositions according to Claims 1 and/or 2, **characterised in that** compound (a) represents dialkylamides derived from monocarboxylic acids following general formula (I) 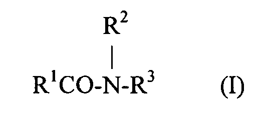 in which R¹CO stands for an aliphatic or aromatic acyl radical having 6 to 22 carbon atoms and 0 or 1 to 3 double bonds, and R² and R³ independently from each other represent a C₁-C₄ alkyl or hydroxyalkyl radical.

4. Compositions according to Claims 1 and/or 2, **characterised in that** compound (a) represents dialkylamides derived from dicarboxylic acids following general formula (II) 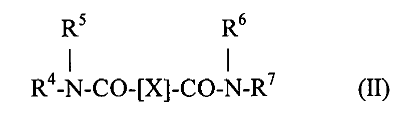 in which R⁴, R⁵, R⁶ and R⁷ independently from each other represent a C₁-C₄ alkyl or hydroxyalkyl radical and X stands for an alkylene group having 1 to 12 carbon atoms.

5. Compositions according to Claims 1 and/or 2, **characterised in that** compound (a) represents dialkylamides derived from hydroxycarboxylic acids following general formula (III) 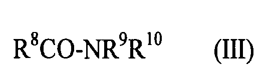 in which R⁸CO stands for a hydroxysubstituted acyl radical having 1 to 22 carbon atoms, and R⁹ and R¹⁰ independently represent a C₁-C₄ alkyl or hydroxyalkyl radical.

6. Compositions according to any of the preceding Claims 1 to 5, **characterised in that** compound (a) represents a dimethylamide, a dibutylamide or a di-2-ethylhexylamide.

7. Compositions according to any of the preceding Claims 1 to 6, **characterised in that** compound (a) represents a C₆-C₁₂ fatty acid dimethylamide or lactic acid dibutylamide.

8. Compositions according to any of the preceding Claims 1 to 7, **characterised in that** compounds (a) and compounds (b) are present in ratios by weight of 99:1 to 40:60.

9. Compositions according to any of the preceding Claims 1 to 8, **characterised in that** they comprise:
(a) 40 to 99 % b.w. of a first solvent selected from the group consisting of carboxylic acid dialkylamides,
(b) 1 to 60 % b.w. of a second solvent selected from the group consisting of C₂-C₄ alcohols, C₁-C₄ ketones, NMP, DMF, mono or dicarboxylic acid esters, aromatic hydrocarbons, terpenes, nitromethane and their mixtures, and
(c) 0 to 15 % b.w. auxiliary agents,
on condition that the amounts add to 100 % b.w.

10. Use of mixtures comprising
(a) a first solvent selected from the group consisting of carboxylic acid dialkylamides, and
(b) a second solvent selected from the group consisting of C₂-C₄ alcohols, C₁-C₄ ketones, NMP, DMF, mono or dicarboxylic acid esters, aromatic hydrocarbons, terpenes, nitromethane and their mixtures
for the removal of lacquers, paints and coatings.
